# FASCICULE DE BREVET EUROPEEN

(11) **EP 3 182 602 B1**
(45) Date de publication et mention de la délivrance du brevet: **28.07.2021**
(21) Numéro de dépôt: 16203329.4
(22) Date de dépôt: 12.12.2016
(51) Int. Cl.: H04B 1/00, H04B 1/44

(54) **DISPOSITIF DE COMMUTATION RF LARGE BANDE A MULTIPLE SORTIES ET POSTE RF UTILISANT UN TEL COMMUTATEUR**
BREITBAND-FUNKFREQUENZ-SCHALTVORRICHTUNG MIT MEHREREN AUSGÄNGEN UND FUNKFREQUENZSTELLE, DIE EINEN SOLCHEN SCHALTER BENUTZT
BROADBAND RF SWITCHING DEVICE WITH MULTIPLE OUTPUTS AND RF STATION USING SUCH A SWITCH

(30) Priorité: 16.12.2015 FR 1502605
(43) Date de publication de la demande: 21.06.2017
(73) Titulaire: Thales, 92400 Courbevoie (FR)
(72) Inventeur: MAILLOUX, Pierre-Yves, 49300 CHOLET (FR); DEMENITROUX, Wilfried, 49300 CHOLET (FR); LETHIEN, Kevin, 49300 CHOLET (FR)
(74) Mandataire: Marks & Clerk France

(56) Documents cités:
- FR-A1- 3 021 813
- GB-A- 2 491 430
- JP-A- 2004 140 696
- US-A1- 2015 130 557
- US-A1- 2015 311 922

## Description

La présente invention concerne un dispositif de commutation radiofréquence à large bande de fréquences, à multiples sorties, optimisé.

Elle concerne également un poste d'émission et de réception radiofréquence utilisant un tel commutateur.

La présente invention concerne plus particulièrement les postes de radiocommunication portatifs. Dans ces postes, comme dans tous dispositifs de radiocommunication, les commutateurs radiofréquences (RF) font partie des composants essentiels. Ils sont notamment implantés entre le système d'émission et de réception et l'antenne.

En particulier, en sortie de l'amplificateur de puissance, le signal doit être dirigé vers un filtre donné parmi une batterie de filtres, correspondant chacun à une sous-bande utilisable.

Il existe un besoin de réaliser des commutateurs RF à sorties multiples (multi sorties), à large bande de fréquences dans une gamme de puissance de l'ordre de 15 Watts, et avec un nombre de sortie au moins supérieur à quatre.

Pour réaliser des commutateurs large bande de 15 W environ, avec plus de quatre sorties RF, réalisant la commutation d'une voie vers quatre voies ou plus, la technique utilisée jusqu'à présent est l'utilisation de diodes pins. Or pour fonctionner ces diodes pins nécessitent une alimentation spécifique de forte tension, supérieure à 50 volts, et un courant de plusieurs dizaines de milliampères. Cette solution présente plusieurs inconvénients.

Un premier inconvénient est la surface occupée importante, en raison notamment de la place occupée par l'alimentation forte tension. Il faut en effet réaliser un convertisseur pour passer d'une tension continue, généralement basse tension, à une autre tension continue, plus haute tension, ce convertisseur étant réalisé à bases de bobinages et de condensateurs. Ces éléments sont dimensionnés par la tension continue de blocage des diodes pins, tension supérieure ou égale à 50 volts, et les courants électriques pour la polarisation des diodes.

Un deuxième inconvénient est la consommation électrique élevée entraînés par cette tension et ces courants. Cette consommation électrique dégrade le rendement global du poste de radiocommunication.

Les solutions actuelles à diodes pins sont donc encombrantes et consommatrices d'énergie, ce qui est dommageable pour des postes de radiocommunication portatifs. A cela, s'ajoute une perte de rendement global.

Depuis quelques années, des commutateurs en technologie CMOS, pouvant fonctionner jusqu'à 15 W, sont proposés sur le marché. Ces commutateurs résolvent notamment les problèmes d'encombrement et de consommation électrique. En effet, ceux-ci n'exigent pas d'alimentation haute tension et leur consommation électrique est très faible. Cependant, ces commutateurs ont toujours un nombre limité de sorties. Ils possèdent au plus quatre sorties de puissance.

Pour obtenir un nombre de sorties supérieur à quatre avec cette technologie CMOS, il faudrait faire réaliser un composant spécifique. Cela nécessiterait un coût de développement très important, incompatible avec des marchés souvent limités de postes de radiocommunications portatifs.

Ainsi, dans le cadre de radiocommunications portatives ou portables, il faut minimiser la consommation électrique et la taille des fonctions de commutation, avec un coût compatible avec les exigences du marché. D'un côté la solution classique avec des diodes pins ne permet pas de répondre au besoin en ce qui concerne la taille et la consommation. D'autre part, la solution à base de commutateurs en technologies CMOS ne permet pas de réaliser des commutateurs ayant un nombre de sorties de puissance supérieur à quatre.

Le document US2015311922 décrit un dispositif de communication RF, comprenant deux commutateurs à plusieurs sorties, les commutateurs étant disposés en parallèle par rapport au point d'entrée du dispositif. Chaque commutateur comprend plusieurs sorties destinées à être reliées à des composants électroniques et 1 sortie en circuit ouvert et est relié au point d'entrée via un filtre et des capacités.

Un but de l'invention est notamment de répondre au besoin exprimé, c'est-à-dire minimiser à la fois la consommation électrique et la taille des fonctions de commutation, à coût réduit.

La présente invention est définie par les caractéristiques de la revendication 1.

Dans un mode de réalisation possible, les commutateurs sont en technologie CMOS.

Dans un mode de réalisation possible, l'entrée de chacun desdits commutateurs est reliée audit point d'entrée via un réseau d'adaptation commun (33), ledit réseau adaptant une ligne RF lorsque celle-ci est reliée à un point de sortie en circuit ouvert.

Chaque commutateur comporte par exemple quatre sorties.

Lesdites fonctions RF sont des filtres RF.

Lesdits commutateurs sont par exemple programmables.

L'invention a également pour objet un poste d'émission et de réception RF, ledit poste comportant au moins un dispositif de commutation RF tel que décrit précédemment.

Ledit poste comportant un amplificateur de puissance, une batterie de filtres et une antenne, ledit dispositif de commutation est par exemple placé d'une part entre ledit amplificateur et la batterie de filtres et d'autre part entre ladite batterie de filtre et la dite antenne, chaque filtre étant relié à une unique sortie de chacun desdits dispositifs de commutation.

Ledit amplificateur, la batterie de filtre et les deux dispositifs de commutation sont par exemple implantés sur une même carte.

Ledit poste est par exemple portatif.

D'autres caractéristiques et avantages de l'invention apparaîtront à l'aide de la description qui suit, faite en regard de dessins annexés qui représentent :
- La figure 1, une illustration du principe de base des postes d'émission radiofréquences tactiques ;
- La figure 2, une présentation d'un assemblage de commutateurs montés en cascade ;
- La figure 3, un exemple de réalisation d'un commutateur radiofréquences selon l'invention, ainsi que l'illustration du principe de fonctionnement d'un tel commutateur ;
- La figure 4, un exemple d'implantation d'un tel commutateur sur un circuit imprimé ;
- La figure 5, un deuxième exemple de réalisation d'un commutateur selon l'invention.

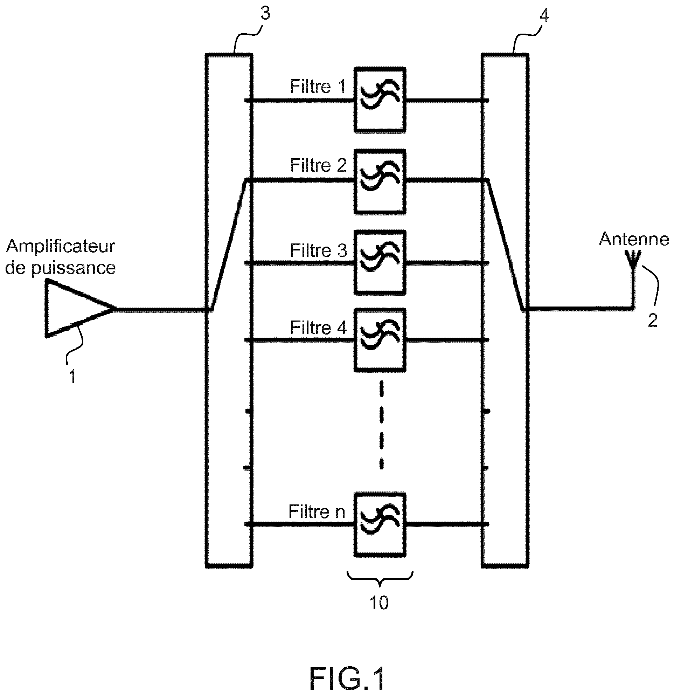

La figure 1 illustre le principe de base des postes d'émission radiocommunications tactiques et plus particulièrement l'utilisation de commutateurs RF. Les signaux d'émission de puissance sont aiguillés vers une série de filtres, chaque filtre correspondant à une fréquence d'utilisation. Une seule antenne étant utilisée pour l'ensemble de la bande de fonctionnement.

Ainsi, en sortie de l'amplificateur de puissance 1, un signal est dirigé vers l'antenne 2 via une batterie de filtres passe-bas 10, adaptés chacun à une sous-bande d'utilisation. Plus précisément le signal est dirigé vers un filtre spécifique 12 parmi la batterie de filtres. A cet effet, la sortie de l'amplificateur est aiguillée vers ce filtre 12 et la sortie de ce dernier est aiguillée vers l'antenne 2. Un commutateur 3, 4 doit donc être utilisé du côté de l'amplificateur et du côté de l'antenne. Chaque commutateur aiguille une entrée vers plusieurs sorties, ou plusieurs entrées vers une sortie, ce qui revient au même du point de vue de la fonction de commutation. On parlera donc par la suite de commutateurs multi-sorties.

Les signaux RF qui transitent par ces commutateurs sont des signaux de puissance et le nombre de filtres nécessaires peut être relativement important et dépasser notamment le nombre quatre. Comme cela a été indiqué précédemment , il est très compliqué de mettre en œuvre un commutateur fonctionnant avec plus de 10 W de puissance RF, ayant un nombre de sorties supérieur à 4, présentant un faible encombrement et consommant peu électriquement.

Les solutions qui permettent aisément de faire des commutateurs multi-sorties, ayant un nombre important de sorties comme dans l'exemple de la figure 1, sont à base de diodes pins.

Les diodes pins s'utilisent selon deux modes, un mode bloqué et un mode passant.

Dans le mode bloqué, il leur faut une tension de blocage assez élevée, supérieure à 50 Volts pour un poste de radiocommunication portatif de 15 W. Cela implique l'utilisation d'un convertisseur de tension continue à tension continue spécifique, ce type de convertisseur étant généralement volumineux.

Dans le mode passant, les diodes pins doivent être polarisées par un courant de plusieurs dizaines de milliampères, ce qui entraîne un rendement dégradé pour un poste de communication tactique portable.

Les solutions compatibles exigences d'encombrement et de consommations électriques sont en technologie CMOS. Les commutateurs du marché supportant plus de 10 W et ayant plus de quatre sorties, soit n'existent pas, soit ne sont pas disponibles pour des applications large bande.

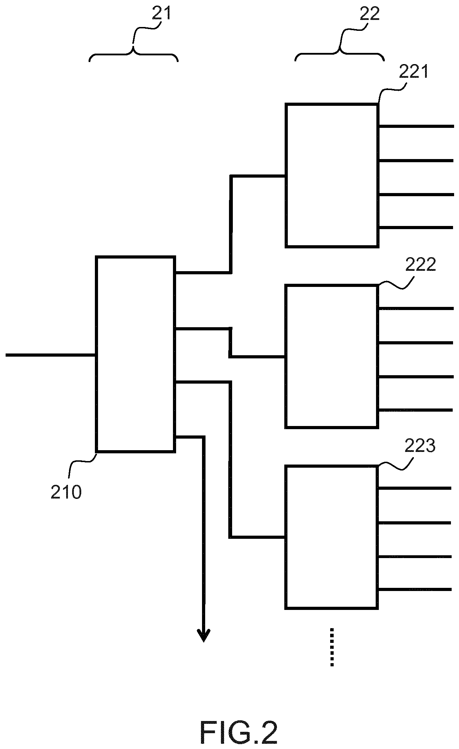

Une solution serait d'utiliser des commutateurs CMOS limités à quatre sorties et d'en monter plusieurs en cascade comme illustré par la figure 2. On aurait ainsi par exemple un premier étage 21 composé d'un commutateur 210 à quatre sorties, puis un deuxième étage 22 composé de plusieurs commutateurs 221, 222, 223 à quatre sorties, chacun ayant son entrée reliée à une sortie du commutateur du premier étage 21.

Une telle solution présente plusieurs inconvénients. Elle nécessite l'utilisation d'un nombre relativement important de commutateurs en raison des étages cascadés, ce qui augmente les coûts de réalisation et n'est pas la solution optimum du point de vue de l'encombrement. Par ailleurs, la mise en cascade des commutateurs complique leur commande. De plus, les performances radiofréquences d'un tel système sont dégradées car la mise en cascade des commutateurs augmente les pertes radiofréquences, ce qui a pour conséquence de diminuer significativement le rendement du poste. Enfin, si on souhaite obtenir un grand nombre de sortie, il faut réaliser beaucoup d'étages en cascade, ce qui complexifie encore le montage.

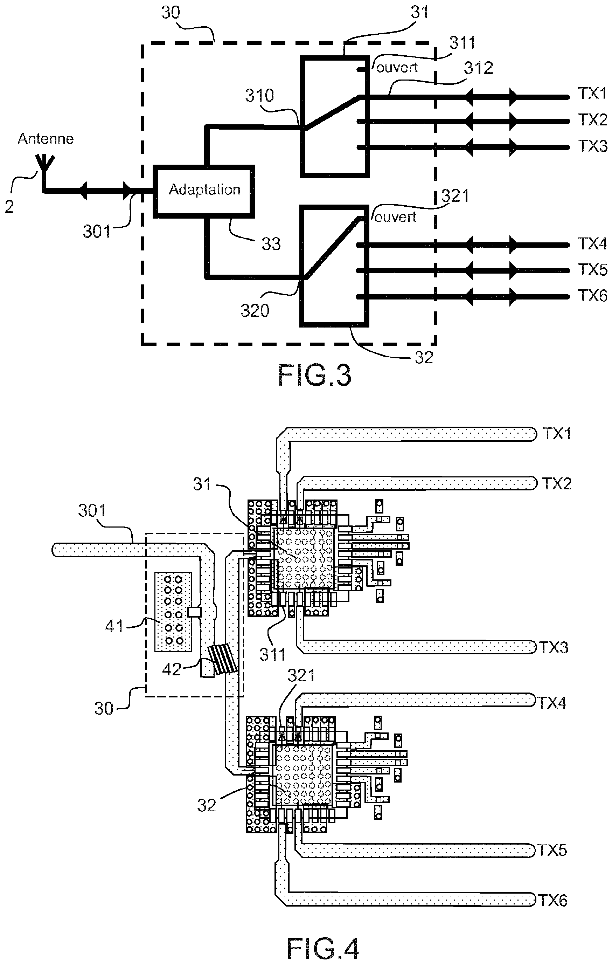

La figure 3 illustre un exemple de réalisation d'un dispositif de commutation RF selon l'invention, minimisant au maximum le nombre de commutateurs utilisé tout en autorisant une commande ou un contrôle simple de ces derniers. Ce dispositif de commutation RF est optimisé en regard des différents critères ou exigences exposés précédemment.

Le dispositif de commutation 30 de la figure 3 est présenté en regard de l'antenne 2. Sa structure serait la même pour une commutation en regard de l'amplificateur de puissance. Cet exemple montre le principe de réalisation d'un dispositif selon l'invention.

La solution proposée par l'invention consiste à mettre en parallèle plusieurs commutateurs 31, 32, CMOS de préférence, sur une même voie RF en prévoyant de laisser sur chaque commutateur une sortie 311, 321 en circuit ouvert.

Ces commutateurs sont compatibles avec la bande de fréquences et la puissance d'une application de radiocommunications donnée afin d'avoir une fonction de commutation présentant plus de quatre sorties sans présenter les inconvénients évoqués dans la description qui précède. Ces commutateurs ont un nombre de sorties limité, quatre par exemple, mais sont facilement disponibles sur le marché. Plus généralement, on peut utiliser tous commutateurs multi-sorties du type « 1 vers N », aiguillant son entrée vers l'une des N sorties, ou inversement.

Un réseau d'adaptation 33 est implanté entre les entrées « 1 voie » 310, 320 de commutateurs afin d'adapter le fonctionnement sur une large bande de fréquences, par exemple dans les domaines VHF et UHF. Ce réseau d'adaptation compense notamment les perturbations causées par les sorties en circuit ouvert.

Sur chacun des commutateurs 31, 32, on laisse donc au moins une voie 311, 321 en circuit ouvert, les autres sorties étant destinées à être reliées à d'autres fonctions RF.

La voie en circuit ouvert 321 est activée sur le commutateur 32 dont les voies ne sont pas utilisées, activé signifiant que l'entrée du commutateur est aiguillée sur ce circuit ouvert. Le commutateur 31 qui contient la voie passante est programmé, utilisé, de façon classique.

Cette mise en parallèle originale, combinée à l'utilisation de voies en circuit ouvert, sera mieux comprise en présentant plus en détail le fonctionnement du dispositif de commutation RF de la figure 3.

Ce dispositif selon l'invention comporte deux commutateurs 31, 32 en parallèle. Chaque commutateur est un commutateur à quatre sorties, en technologie CMOS, une entrée 310, 320 étant commutée vers l'une des quatre sorties. Pour chaque commutateur, il y a au moins une sortie qui est laissée en circuit ouvert. Dans l'exemple de la figure 3, chaque commutateur a trois sorties utilisées, reliées par exemple chacune à un filtre, et une sortie en 311, 321 en circuit ouvert. Avec ces deux commutateurs en parallèle, le dispositif selon l'invention peut donc aiguiller une voie 301 vers six fonctions RF, TX1 à TX6.

La figure 3 présente un état de commutation où le premier commutateur 31 contient la voie passante 312. Dans cet état, le deuxième commutateur 32 n'est pas utilisé. Son entrée 320 est alors commutée sur la sortie 321 en circuit ouvert.

En fonctionnement un signal RF est aiguillé sur la voie passante 312 du premier commutateur 31, vers une autre fonction RF, un filtre par exemple. L'entrée du deuxième commutateur 32 étant aiguillée vers la sortie 321 en circuit ouvert, ce dernier est vu comme circuit ouvert. Une onde incidente se réfléchit alors. L'onde alors réfléchie par le circuit ouvert peut perturber le fonctionnement de l'autre commutateur et des autres circuits RF en amont. Le réseau d'adaptation 33, reliant les entrées 310, 320 des commutateurs et l'entrée 301 du dispositif de commutation « annule » l'onde réfléchie. Plus précisément, il adapte la ligne RF à l'impédance présentée par le circuit ouvert et compense les capacités parasites créées à l'ouverture ou à la fermeture des circuits.

Ce réseau d'adaptation est classiquement réalisé à base d'inductances et de capacités. L'onde réfléchie étant « filtrée » par adaptation du circuit, le premier commutateur 31 peut alors fonctionner comme un commutateur standard car il n'est pas perturbé par la présence du deuxième commutateur 32, en circuit ouvert.

La figure 4 présente un exemple d'implantation d'un dispositif selon l'invention sur un circuit imprimé RF. A titre d'exemple, on présente l'implantation du dispositif de la figure 3. Les deux commutateurs 31, 32 sont implantés en parallèle, chacun ayant une sortie 311, 321 laissée en circuit ouvert, les autres sorties étant reliées via des pistes à d'autres fonctions RF, TX1 à TX6. L'entrée 301 du dispositif est reliée aux entrées des commutateurs via le réseau d'adaptation 30 constitué de capacités 41 et d'inductances 42, découplant les deux commutateurs.

Dans un poste d'émission et de réception RF, la fonction décrite par la figure 1, à l'exception de l'antenne, peut être implantée sur une même carte. En particulier, l'amplificateur de puissance 1, un premier dispositif de commutation 30 selon l'invention, la batterie de filtres (10) et un deuxième dispositif de commutation (30) selon l'invention peuvent être implantés sur un même circuit imprimé. Dans ce cas, l'implantation d'un dispositif de commutation selon l'invention est du type de celle illustrée par la figure 4.

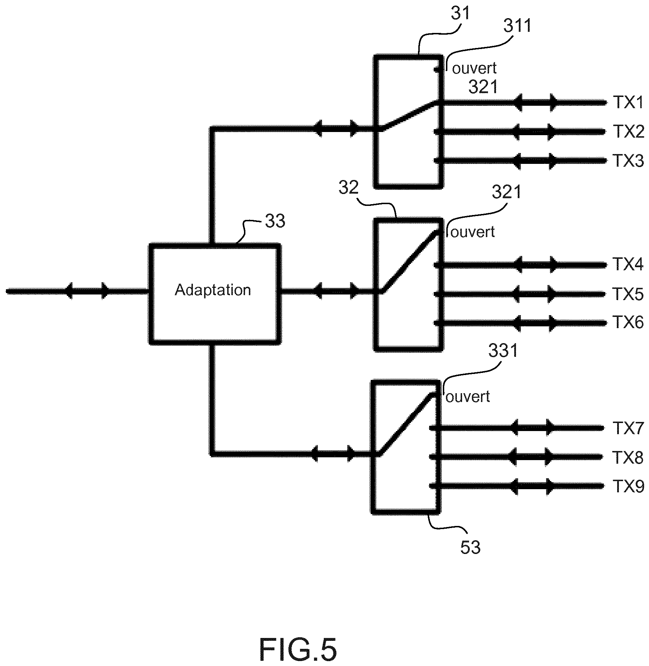

La figure 5 présente un autre exemple de réalisation d'un dispositif de commutation RF selon l'invention permettant d'obtenir une fonction de commutation à 9 sorties. Dans cet exemple de réalisation, par rapport au montage de la figure 3, le dispositif de commutation comporte un troisième commutateur 53, à quatre voies. Comme les autres commutateurs 31, 32, ce troisième commutateur 53 comporte trois sorties utilisées, reliées à d'autres fonctions RF, et une sortie laissée en circuit ouvert.

La figure 5 présente un état de fonctionnement analogue à celui de la figure 3. En particulier, le premier commutateur contient la voie passante. Les deux autres commutateurs 32, 53 ont chacun leur entrée aiguillée sur leur sortie 321, 531 en circuit ouvert. Le réseau d'adaptation 33 découple ces commutateurs du premier commutateur qui peut ainsi fonctionner normalement.

Un dispositif de commutation RF selon l'invention peut avantageusement être utilisé sur un poste de radiocommunication tactique portable à large bande de fréquences.

Il peut, selon le schéma de principe de la figure 1, être implanté entre un amplificateur de puissance 1 et des filtres passe-bas 10 et entre les filtres passe-bas et une antenne 2. Il permet au système de sélectionner le filtre passe-bas correspondant à la bande de fréquence utilisée et d'utiliser une seule antenne pour toute la bande.

Les exemples de réalisation précédents montre que l'invention apportent notamment les avantages suivant :
- Un encombrement réduit, car l'invention ne nécessite pas d'alimentation haute tension et commutateurs CMOS du marché sont relativement de petites dimensions ;
- Un fonctionnement sur une large bande de fréquences, les commutateurs CMOS ayant naturellement une large bande ;
- Une consommation électrique réduite, en raison de la faible consommation des composants CMOS ;
- La possibilité de réaliser facilement une fonction de commutation avec un grand nombre de sortie, en effet la mise en parallèle de plusieurs commutateurs est aisée ;
- Une bonne reproductibilité des performances, en raison notamment de la simplicité de mise en oeuvre ;
- Une utilisation de commutateurs électroniques du commerce sans réglage.

## Revendications

1. Dispositif de commutation RF, ledit dispositif étant configuré pour aiguiller un signal RF présent à son point d'entrée (301) vers l'une de ses sorties pour former une voie RF passante commutable, ledit dispositif comportant au moins deux commutateurs à multiples sorties (31, 32) reliés en parallèle audit point d'entrée (301), chaque commutateur (31, 32, 53) ayant au moins une sortie (311, 321) laissée en circuit ouvert, ses autres sorties étant destinées à être reliées à des fonctions RF, ledit dispositif étant **caractérisé en ce qu'**en fonctionnement un commutateur (32, 53) ne contenant pas ladite voie passante (310, 312) a son entrée (320) reliée à sa sortie (321, 531) en circuit ouvert, l'entrée de chacun desdits commutateurs (31, 32, 53) étant reliée audit point d'entrée via un réseau d'adaptation commun (33) de sorte que ledit réseau d'adaptation est directement connecté aux entrées desdits commutateurs (31, 32) et de sorte que ledit signal RF passe dudit point d'entrée à ladite entrée de chacun desdits commutateurs via ledit réseau (33), ledit réseau étant configuré pour annuler les ondes réfléchies provenant des sorties desdits commutateurs en circuit ouvert.

2. Dispositif de commutation selon la revendication 1, **caractérisé en ce que** lesdits commutateurs (31, 32, 53) sont en technologie CMOS.

3. Dispositif de commutation selon l'une quelconque des revendications précédentes, **caractérisé en ce que** chaque commutateur (31, 32, 53) comporte quatre sorties.

4. Dispositif selon l'une quelconque des revendications précédentes, **caractérisé en ce que** lesdites fonctions RF sont des filtres RF.

5. Dispositif selon l'une quelconque des revendications précédentes, **caractérisé en ce que** lesdits commutateurs (31, 32, 53) sont programmables.

6. Poste d'émission et de réception RF, **caractérisé en ce qu'**il comporte au moins un dispositif de commutation RF (30) selon l'une quelconque des revendications précédentes.

7. Poste d'émission et de réception selon la revendication 6, **caractérisé en ce qu'**il comporte un amplificateur de puissance (1), une batterie de filtres (10) et une antenne (2), un dispositif de commutation (30) étant placé entre ledit amplificateur (1) et la batterie de filtres (10) et un dispositif de commutation (30)entre ladite batterie de filtre (10) et la dite antenne (2), chaque filtre étant relié à une unique sortie de chacun desdits dispositifs de commutation (30).

8. Poste d'émission et de réception selon la revendication 7, **caractérisé en ce que** ledit amplificateur (1), la batterie de filtre (10) et les deux dispositifs de commutation (30) sont implantés sur une même carte.

9. Poste d'émission et de réception selon l'une des revendications 6 à 8, **caractérisé en ce qu'**il est portatif.

## Patentansprüche

1. Funkfrequenz-Schaltvorrichtung, wobei die Vorrichtung konfiguriert ist, um ein an ihrem Eingangspunkt (301) anliegendes Funkfrequenzsignal an einen ihrer Ausgänge zu leiten, um einen schaltbaren Funkfrequenz-Durchgangskanal zu bilden, wobei die Vorrichtung mindestens zwei Schalter mit multiplen Ausgängen (31, 32) umfasst, welche parallel mit dem Eingangspunkt (301) verbunden sind, wobei jeder Schalter (31, 32, 53) mindestens einen in offenem Kreislauf belassenen Ausgang (311, 321) aufweist, wobei seine anderen Ausgänge dazu bestimmt sind, mit Funkfrequenzfunktionen verbunden zu werden, wobei die Vorrichtung **dadurch gekennzeichnet ist, dass**, im Betrieb, ein Schalter (32, 53), welcher den Durchgangskanal (310, 312) nicht besitzt, seinen Eingang (320) aufweist, der mit seinem Ausgang (321, 531) in offenem Kreislauf verbunden ist, wobei der Eingang eines jeden der Schalter (31, 32, 53) mit dem Eingangspunkt über ein gemeinsames Anpassungsnetz (33) in einer Weise verbunden ist, dass das Anpassungsnetz direkt mit den Eingängen der Schalter (31, 32) verbunden ist und in einer Weise, dass das Funksignal vom Eingangspunkt zum Eingang eines jeden der Schalter (33) passiert, wobei das Netzwerk konfiguriert ist, um die reflektierten Wellen aufzuheben, welche aus den Ausgängen der Schalter in offenem Kreislauf stammen.

2. Schaltvorrichtung nach Anspruch 1, **dadurch gekennzeichnet, dass** die Schalter (31, 32, 53) Schalter mit CMOS-Technologie sind.

3. Schaltvorrichtung nach einem der vorhergehenden Ansprüche, **dadurch gekennzeichnet, dass** jeder Schalter (31, 32, 53) vier Ausgänge aufweist.

4. Vorrichtung nach einem der vorhergehenden Ansprüche, **dadurch gekennzeichnet, dass** die Funkfrequenzfunktionen Funkfrequenzfilter sind.

5. Vorrichtung nach einem der vorhergehenden Ansprüche, **dadurch gekennzeichnet, dass** die Schalter (31, 32, 53) programmierbar sind.

6. Funkfrequenz-Sende- und -Empfangsstation, **dadurch gekennzeichnet, dass** sie mindestens eine Funkfrequenz-Schaltvorrichtung (30) nach einem der vorhergehenden Ansprüche aufweist.

7. Funkfrequenz-Sende- und -Empfangsstation nach Anspruch 6, **dadurch gekennzeichnet, dass** sie einen Leistungsverstärker (1), eine Filterbatterie (10) und eine Antenne (2) aufweist, wobei eine Schaltvorrichtung (30) zwischen dem Verstärker (1) und der Filterbatterie (10) platziert ist und eine Schaltvorrichtung (30) zwischen der Filterbatterie (10) und der Antenne (2) platziert ist, wobei jeder Filter mit einem einzigen Ausgang einer jeden der Schaltvorrichtungen (30) verbunden ist.

8. Funkfrequenz-Sende- und -Empfangsstation nach Anspruch 7, **dadurch gekennzeichnet, dass** der Verstärker (1), die Filterbatterie (10) und die beiden Schaltvorrichtungen (30) an einer selben Karte implementiert sind.

9. Funkfrequenz-Sende- und -Empfangsstation nach einem der Ansprüche 6 bis 8, **dadurch gekennzeichnet, dass** sie tragbar ist.

## Claims

1. An RF switching device, said device being configured to route an RF signal present at its input point (301) to one of its outputs in order to form a switchable conducting RF channel, said device having at least two multi-output switches (31, 32) that are connected in parallel to said input point (301), each switch (31, 32, 53) having at least one output (311, 321) left open-circuit, its other outputs being intended to be connected to RF functions, said device being **characterized in that**, when operating, a switch (32, 53) not containing said conducting channel (310, 312) has its input (320) connected to its open-circuit output (321, 531), the input of each of said switches (31, 32, 53) being connected to said input point via a common matching network (33), such that said matching network is directly connected to said inputs of said switches (31, 32), and such that said RF signal passes from said input point to said input of each said switches via said network (33), said network being configured to cancel out the reflected waves originating from the outputs of said open-circuit switches.

2. The switching device according to claim 1, **characterized in that** said switches (31, 32, 53) are in CMOS technology.

3. The switching device according to either one of the preceding claims, **characterized in that** each switch (31, 32, 53) has four outputs.

4. The device according to any one of the preceding claims, **characterized in that** said RF functions are RF filters.

5. The device according to any one of the preceding claims, **characterized in that** said switches (31, 32, 53) are programmable.

6. An RF transmitting and receiving station, **characterized in that** it has at least one RF switching device (30) according to any one of the preceding claims.

7. The transmitting and receiving station according to claim 6, **characterized in that** it has a power amplifier (1), a battery of filters (10) and an antenna (2), a switching device (30) being placed between said amplifier (1) and the battery of filters (10) and a switching device (30) being placed between said filter battery (10) and said antenna (2), each filter being connected to a single output of each of said switching devices (30).

8. The transmitting and receiving station according to claim 7, **characterized in that** said amplifier (1), the filter battery (10) and the two switching devices (30) are mounted on the same board.

9. The transmitting and receiving station according to one of claims 6 to 8, **characterized in that** it is portable.
